# EUROPEAN PATENT APPLICATION

(11) **EP 2 717 023 A1**
(43) Date of publication of application: **09.04.2014**
(21) Application number: 12793621.9
(22) Date of filing: 12.03.2012
(51) Int. Cl.: G01D 5/245, G01B 7/30

(54) **POSITION DETECTING APPARATUS**

(30) Priority: 30.05.2011 JP 2011120389
(71) Applicant: Nippon Seiki Co., Ltd., Nagaoka-shi, Niigata 940-8580 (JP)
(72) Inventor: IWAHASHI,Masaru, Niigata (JP)
(74) Representative: Jackson, Richard Eric
(86) International application number: PCT/JP2012/056231
(87) International publication number: WO 2012/164995

(57) **Abstract**

Provided is a position detecting apparatus, wherein influence to detection accuracy can be suppressed without being affected by an external magnetic field. A position detecting apparatus is provided with: a rotating member, which rotates corresponding to rotating operations of an operating unit that is rotatably provided on a handle bar; a unit to be detected, which is fixed to the rotating member; a detecting unit which detects the unit to be detected; and a housing, which houses the unit to be detected, and the detecting unit. The unit to be detected is composed of a substrate, which is provided with a plurality of bodies to be detected, each of which is composed of a soft magnetic metal, said bodies provided in an arc-like manner, and a detecting unit is disposed to face the substrate, and detects rotation of the substrate.

## Description

### Technical Field

The present invention relates to a position detecting apparatus configure to detect an operating position of operating means such as a handle grip of a two-wheel vehicle.

### Background Art

A position detector of the related art includes a handle grip mounted on a handle bar of a two-wheel vehicle so as to be rotatable, a moving member configured to rotate synchronously with a rotating operation of the handle grip and provided with a closed magnetic circuit as a unit to be detected formed of a magnet or a magnetic body, a magnetism detecting unit as a detecting unit configured to detect a leaked magnetic field generated in the closed magnetic circuit, a circuit board on which the magnetism detecting unit is mounted, and a frame body configured to store the moving member, the magnetism detecting unit, the circuit board, and the like (For example, see PTL 1).

### Citation List

### Patent Literature

PTL 1: JP-A-2009-98005

### Summary of Invention

### Technical Problem

In the position detecting apparatus of the related art, since a magnet or a magnetic body is employed in the unit to be detected and the magnetism detecting unit is employed as the detecting unit, there is a risk of lowering of detection accuracy of the detecting unit caused by a distortion occurring in the closed magnetic circuit due to an external magnetic field caused by accessories that an operator wears or a magnetic property of the handle bar formed of iron-based material which is a magnetic body.

In view of such problems described above, it is an object of the present invention to provide a position detecting apparatus configured not to be affected by an external magnetic field and to be capable of suppressing an influence of detection accuracy.

### Solution to Problem

A position detecting apparatus of the present invention includes a rotating member configured to rotate according to an rotating operation of an operating portion provided so as to be rotatable, a unit to be detected fixed to the rotating member, a detecting unit configured to detect the unit to be detected, and a housing configured to store the unit to be detected and the detecting unit, and is characterized in that the unit to be detected includes a substrate on which a plurality of bodies to be detected formed of a soft magnetic metal are provided in an arc shape, and the detecting unit detects the rotation of the substrate arranged so as to face the substrate.

Also, the soft magnetic metal is copper.

Also, a protection film configured to protect the copper is provided.

Also, a supporting member configured to support the rotating member so as to be rotatable is provided, and the supporting member includes a first holding portion configured to hold a spring that restores the operating portion to an initial position and a second holding portion configured to hold the detecting unit so as to face the bodies to be detected on the substrate.

Also, the first holding portion is a storage portion configured to store at least a part of the spring.

Also, the second holding portion is a storage portion configured to store at least a part of the detecting units.

Also, the detecting unit is mounted on a circuit board and the circuit board is fixed by a filling member filled in the second holding unit.

### Advantageous Effects of Invention

As described above, according to the present invention, a position detecting apparatus configured not to be affected by an external magnetic field and to be capable of suppressing an influence of detection accuracy is provided.

### Brief Description of Drawings

[Fig. 1] Fig. 1 is a top view of a position detecting apparatus according to a first embodiment of the present invention.
[Fig. 2] Fig. 2 is a cross-sectional view taken along a line A-A in Fig. 1.
[Fig. 3] Fig. 3 is a side view of a unit to be detected. Description of Embodiments

With reference to attached drawings, a first embodiment of the invention will be described below with an example of a position detecting apparatus configured to detect a position of operation (angle of rotation) of the handle grip, which is an operating portion provided on a handle bar of a two-wheel vehicle so as to be rotatable.

A position detecting apparatus 1 of the present invention is configured to be provided on a handle bar 2 of a two-wheel vehicle, not illustrated, and includes a rotating member 4 configured to rotate according to an rotating operation of the handle grip 3 as an operating unit rotatably provided on the handle bar 2, a unit to be detected 5 fixed to the rotating member 4, a detecting unit 6 configured to detect the unit to be detected 5, a holding member 7 configured to support the unit to be detected 5 so as to be rotatable and fix the detecting unit 6, and a housing 8 configured to store the unit to be detected 5 and the detecting unit 6.

The handle bar 2 is formed of a metal such as iron and aluminum, and is a cylindrical rod-shaped member.

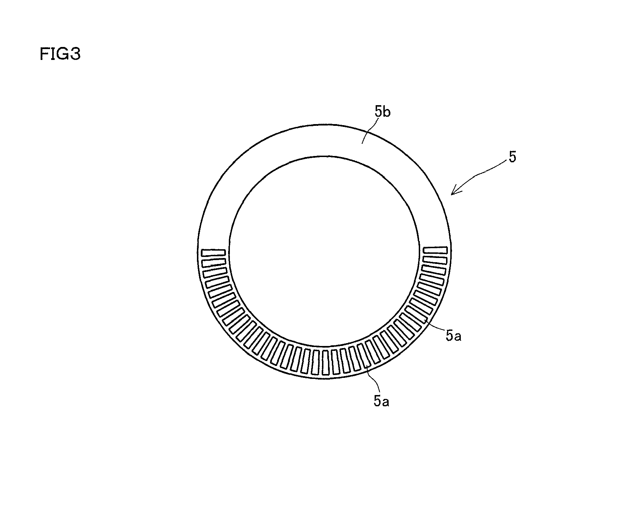

The handle grip 3 includes a sleeve 3a and a grip portion 3b, and the sleeve 3a has a cylindrical shape formed of a synthetic resin and is positioned on an outer periphery of the handle bar 2 so as to be rotatable. The sleeve 3a is provided with a flange portion 3c at an end portion on the left side in Fig. 3. The flange portion 3c has a disc shape, and is provided on the outer periphery of the handle grip 3 without an interruption. The flange portion 3c is provided with a coupling portion 3d coupled to the unit to be detected 5 and configured to transmit a rotation of the handle grip 3 at a part of an edge thereof.

The grip portion 3b is a portion gripped by the operator, is formed of a resilient member such as rubber, covers the outer periphery of the sleeve 3a without an interruption, and is fixed firmly to the sleeve 3a.

The rotating member 4 is formed of a synthetic resin material, is provided with a cylindrical sliding portion 4a configured to allow an insertion of a cylindrical portion, described later, provided on the holding member 7 and slide on the outer periphery of the cylindrical portion, and is rotatably supported by the holding member 7. The cylindrical sliding portion 4a (at one end thereof) is provided with a flange portion 4b formed on the outside thereof. The unit to be detected 5 is arranged on the flange portion 4b. The rotating member 4 is provided with a holding portion 4c configure to hold one end of a spring, described later. The rotating member 4 is provided with a receiving portion 4d formed of a depression which allows an insertion of a coupling portion 3d provided on the handle grip 3. The rotation of the handle grip 3 is transmitted to the rotating member 4 by inserting the coupling portion 3d of the handle grip 3 into the receiving portion 4d, whereby the unit to be detected 5 is rotated.

The unit to be detected 5 is a substrate 5b provided with a plurality of bodies to be detected 5a formed of a metal which resists magnetization, for example, copper on an insulating member formed by impregnating glass fiber or paper with epoxy resin or phenol resin and solidifying into a hard plate shape. The bodies to be detected 5a are copper foils obtained by shaping copper into a thin profile, disposed evenly into an arc shape at the same angle and the same distance, and covered with an insulating resin (resist) applied or adhered thereto as a protection film on the surfaces thereof so as to protect the surfaces from dirt such as water and dust.

The detecting unit 6 includes two pairs of detection coils on the silicon wafer, and is configured to detect an electric current induced by the respective coils due to a change in magnetism in association with the rotations of the bodies to be detected 5a and detect the rotated position of the unit to be detected 5.

The detecting unit 6 is mounted on a circuit board 61. The detecting unit 6 is arranged so as to face the substrate 5b, and detects the rotation of the substrate 5b.

The circuit board 61 is an insulative base member such as glass epoxy resin or the like provided with electrically-conducting path, not illustrated, or electronic components and the like electrically connected to the electrically-conducting path. The detecting unit 6 is electrically connected to the circuit board 61. Also, wiring 54 connected to an external circuit is electrically connected to the circuit board 61. Signals from the detecting unit 6 is output to the external circuit via the circuit board 61 and the wiring 54.

The holding member 7 is formed of a synthetic resin, has a cylindrical portion 71 having an annular shape and provided with a hole through which the handle bar 2 penetrates, and surrounds the outer periphery of the handle bar 2. Then, the holding member 7 is fixed to the handle bar 2 by means, not illustrated, so as not to rotate. The holding member 7 rotatably supports the rotating member 4 with the cylindrical portion 71.

The holding member 7 includes a first holding portion 72 configured to hold a spring 9 (coil spring) that restores the handle grip 3 into an initial position and a second holding portion 73 configured to hold the detecting unit 6 so as to face the bodies to be detected 5a of the substrate 5b.

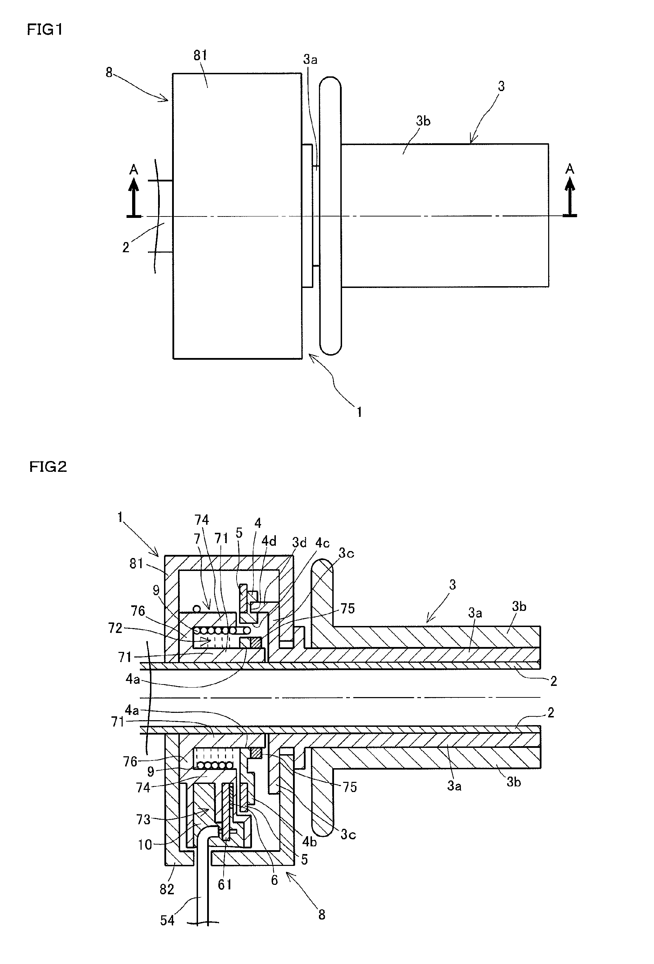

The first holding portion 72 is formed by providing a second cylindrical portion 74 on the outside of the cylindrical portion 71, and connecting the cylindrical portion 71 and the second cylindrical portion 74 with a coupling portion 76 on the left side in Fig. 2, and constitutes a storage portion for storing at least part of the spring 9. The spring 9 is a coil spring formed of a wire rod formed of a metal material having springiness and mainly formed into a helical shape, and is configured to restore the handle grip 3 operated by the operator into an initial position. The spring 9 is arranged so that the cylindrical portion 71 is positioned on the inside and the second cylindrical portion 74 is positioned on the outside. The second cylindrical portion 74 is provided with a notch at a portion, not illustrated, and one end of the spring 9 is held in the notch.

Also the holding member 7 is provided with a functional portion 75 mounted on the right side of the cylindrical portion 71 in Fig. 2. The functional portion 75 is configured to prevent the unit to be detected 5 from dropping from the cylindrical portion 71, and restricts the movement of the rotating member 4 pressed by the spring 9 rightward in Fig. 2 in the direction of an axis of rotation of the handle grip 3. The spring 9 is configured to restore the handle grip 3 operated by the operator to an initial position.

The second holding portion 73 is a storage portion configured to store at least part of the detecting unit 6, and stores the circuit board 61 provided on the outside of the second cylindrical portion 74 and having the detecting unit 6 mounted thereon. Fixation is achieved by a filling member 10 to be filled in the second holding portion 73. The filling member 10 is formed of thermoplastic resin such as epoxy resin or urethane resin, and configured to fill the second holding portion 73 so as to fix the detecting unit 6 and the circuit board 61 disposed in the second holding portion 73 and insulate the same from invading substances such as water and dust from the outside.

The housing 8 includes first and second housings 81 and 82. The first and second housings 81 and 82 are both formed of non-magnetic metallic materials such as aluminum and other variety of metallic materials or synthetic resins, and have a substantially semicircular cup shape. The first and second housings 81 and 82 are divided along the direction of a center axis of rotation of the handle grip 3. The first and second housings 81 and 82 are fixed by means of adequate means such as welding.

The housing 8 is configured to store the unit to be detected 5, the detecting unit 6, and the holding member 7 therein. The housing 8 is fixed so as not to rotate with respect to the handle bar 2 by means, not illustrated.

With the configuration described above, influence on the detection accuracy may be suppressed without being affected by an external magnetic field.

### Industrial Applicability

The present invention may be applied to a position detecting apparatus configure to detect an operating position of operating means such as a handle grip of a two-wheel vehicle. Reference Signs List

1: position detecting apparatus
3: handle grip (operating portion)
4: rotating member
4a: sliding portion
5: unit to be detected
5a: body to be detected
5b: substrate
6: detecting unit
7: holding member
8: housing
9: spring
10: filling member
61: circuit board
72: first holding portion
73: second holding portion

## Claims

1. A position detecting apparatus comprising:
a rotating member configured to rotate according to a rotating operation of an operating portion provided so as to be rotatable;
a unit to be detected fixed to the rotating member;
a detecting unit configured to detect the unit to be detected; and
a housing configured to store the unit to be detected and the detecting unit, **characterized in that**
the unit to be detected includes a substrate on which a plurality of bodies to be detected formed of a soft magnetic metal are provided in an arc shape, and
the detecting unit detects the rotation of the substrate arranged so as to face the substrate.

2. The position detecting apparatus according to Claim 1, **characterized in that** the soft magnetic metal is copper.

3. The position detecting apparatus according to Claim 2, **characterized in that** a protection film configured to protect the copper is provided.

4. The position detecting apparatus according to Claim 1, comprising a supporting member configured to support the rotating member so as to be rotatable, **characterized in that** the supporting member includes a first holding portion configured to hold a spring that restores the operating portion to an initial position and a second holding portion configured to hold the detecting unit so as to face the bodies to be detected on the substrate.

5. The position detecting apparatus according to Claim 4, **characterized in that** the first holding portion is a storage portion configured to store at least a part of the spring.

6. The position detecting apparatus according to Claim 4, **characterized in that** the second holding portion is a storage portion configured to store at least a part of the detecting unit.

7. The position detecting apparatus according to Claim 6, **characterized in that** the detecting unit is mounted on a circuit board and the circuit board is fixed by a filling member filled in the second holding unit.
